# EUROPEAN PATENT APPLICATION

(11) **EP 3 792 133 A1**
(43) Date of publication of application: **17.03.2021**
(21) Application number: 20195452.6
(22) Date of filing: 10.09.2020
(51) Int. Cl.: B61D 33/00, B61D 41/00, B60N 2/00

(54) **SYSTEM AND METHOD FOR DETECTING SEAT OCCUPANCY ON A RAILWAY CAR OF A RAILWAY VEHICLE**

(30) Priority: 11.09.2019 IN 201941036618
(71) Applicant: ALSTOM Transport Technologies, 93400 Saint-Ouen-sur Seine (FR)
(72) Inventor: GURUSAMY, Palanikumar, 625001 Madurai (IN); GANESAN, Muniandi, 626001 Virudhunagar (IN); ROY, Ajil, 683513 North Parur (IN)
(74) Representative: Lavoix

(57) **Abstract**

A system for detecting seat occupancy on a railway car (1) of a railway vehicle (500) comprising a plurality of compartments (2), the system comprising a seat occupancy database (4) and a remote control center (6) which includes a railway vehicle ticket database (8), wherein the seat occupancy database (4) comprises data relative to the occupancy status of seats of the compartments (2) and the railway vehicle ticket database (8) comprises data relative to reserved railway tickets bought from passengers, each compartment (2) comprising a plurality of seats (10) and corresponding sensors (12) mounted over each seat (10), respectively, arranged to detect an occupancy status of the associated seat (10)

## Description

The present invention concerns a system and a method for detecting seat occupancy on a railway car of a railway vehicle.

Currently, on railway vehicles during rail travels, there is lack of connectivity between passengers and their friends/relatives, ticket collectors, pantry and maintenance staff. Due to this, the security of passengers, especially single women with kids or aged people, during long-distance journeys, is a great worry for friends and relatives who are not traveling with them.

In addition to the above, for the passengers, there is no possibility, during the travel, to change the seat, or to move to an upper class, even if there is a vacant/unutilized seat.

Furthermore, on-board ticket collectors do not have the possibility to contact instantaneously a remote control center in case of railway vehicle delays, disruptions or incidents, to plan an alternative travel arrangement on behalf of the passengers.

Due to these problems, a railway vehicle journey is often uninteresting for the majority of single passengers.

There is therefore the need to have a system and a method for detecting seat occupancy on a vehicle.

This and other objects are fully achieved by virtue of a system for detecting seat occupancy on a railway car of a railway vehicle having the characteristics defined in independent claim 1, by a method for detecting seat occupancy on a railway car of a railway vehicle as defined in claim 5 , and by a railway vehicle as defined in claim 12.

Preferred embodiments of the invention are specified in the dependent claims, whose subject-matter is to be understood as forming an integral part of the present description.

Further characteristics and advantages of the present invention will become apparent from the following description, provided merely by way of a non-limiting example, with reference to the enclosed drawings, in which:
- Figure 1 is an overall schematic view of a system for detecting seat occupancy on a railway car 1 of a railway vehicle 500 according to the present invention;
- Figure 2 is an enlargement of a compartment 2;
- Figure 3 is a block diagram of the steps of a method for detecting seat occupancy on a railway car of a railway vehicle according to the present invention;
- Figure 4 is a schematic picture of the network created in each compartment;
- Figure 5 is a schematic picture of the network of the railway vehicle;
- Figure 6 shows a picture of the interface of the mobile application as shown on a display of a mobile device in the Remote Guest mode;
- Figure 7 shows a picture of the interface of the mobile application as shown on a display of a mobile device in a Local Guest mode;
- Figure 8 shows a picture of the interface of the mobile application as shown on a display of a mobile device in a Passenger mode;
- Figure 9 shows a picture of the interface of the mobile application as shown on a display of a mobile device in a TTC (Travelling Ticket Collector) mode;
- Figure 10 shows a picture of the interface of the mobile application as shown on a display of a mobile device in a Maintenance Staff mode; and
- Figure 11 shows a picture of the interface of the mobile application as shown on a display of a mobile device in a Pantry Staff mode.

Briefly, the present invention proposes a system and a method for detecting seat occupancy on a railway car of a railway vehicle, which allows a secure remote monitoring of passengers travelling on the railway vehicle, which allows the possibility, for a passenger, to extend his journey and the possibility, for a ticket collector, to perform an effective vacant seat management.

The system and method of the present invention are based on the use of sensors such as pyroelectric infrared (PIR) sensors, ultrasonic sensors and cameras located in each compartment of a railway car of a railway vehicle. By a proper arrangement of these sensors and the provision of remote databases connected to the sensors, it is possible to efficiently manage the seat occupancy on the railway vehicle, as here below disclosed in detail.

Additionally, thanks to the use of the sensors, it is also possible to control an HVAC system of the railway vehicle, to save electrical energy in an integrated manner.

Based on an occupancy time of each seat, a use-based maintenance of the seats can be properly planned and performed by a maintenance staff.

The proposed system and method allow monitoring the passengers by a ticket controller, thus reducing ticket violations, improving vacant seat management, controlling an HVAC and lightening system of the railway vehicle, and performing a chaos-free transit during emergency or travel disruption situation.

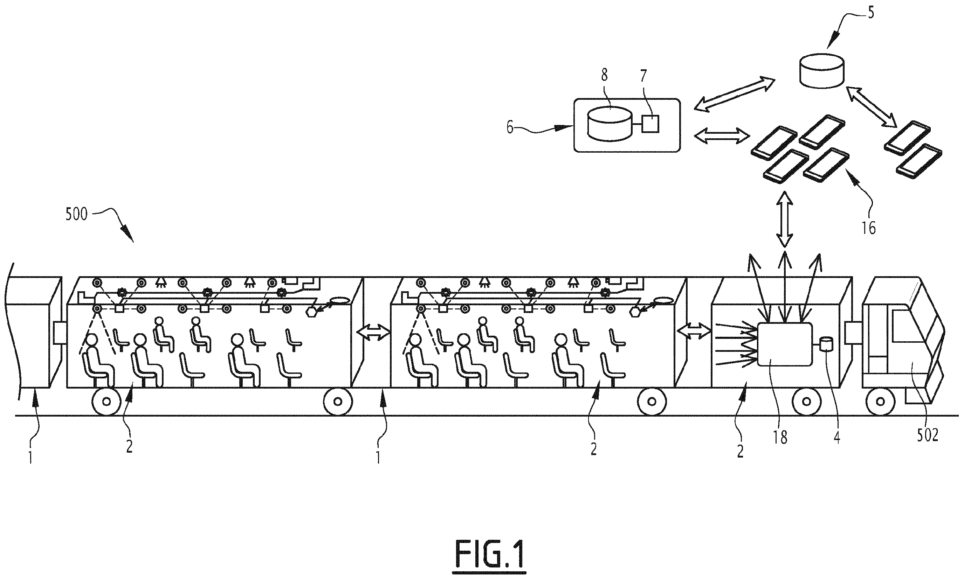

Figure 1 is an overall schematic view of a system for detecting seat occupancy on a railway car 1 of a railway vehicle 500 according to the present invention.

The railway car 1 comprises, in a manner per se known, a plurality of compartments 2. In the following of the description, reference will be made to a single railway car 1, but the system and method of the present invention also apply in the case the railway vehicle 500 comprises a plurality of railway cars.

The system of the present invention comprises a seat occupancy database 4 and a remote control center 6, which includes a railway vehicle ticket database 8 and a remote seat occupancy database 5 (which, in figure 1, is shown outside the remote control center 6 for simplicity). A control unit 7 is also included in the remote control center 6 and it is arranged to perform, in a manner per se known, all the operations related to the remote control center 6 as disclosed here below.

The remote seat occupancy database 5 comprises data relative to the occupancy status of seats of the compartments 2 of the railway car 1.

The seat occupancy database 4, which is for example located in a compartment 2 next to a locomotive 502 of the railway vehicle 500, comprises data relative to the occupancy status of seats of the compartments 2 of the railway car 1.

The railway vehicle ticket database 8 comprises data relative to reserved railway tickets bought from passengers like on-boarding station, de-boarding station, number of passengers and Passenger Name Record (PNR) number (for example, an alpha numeric number of 10 to 16 digits).

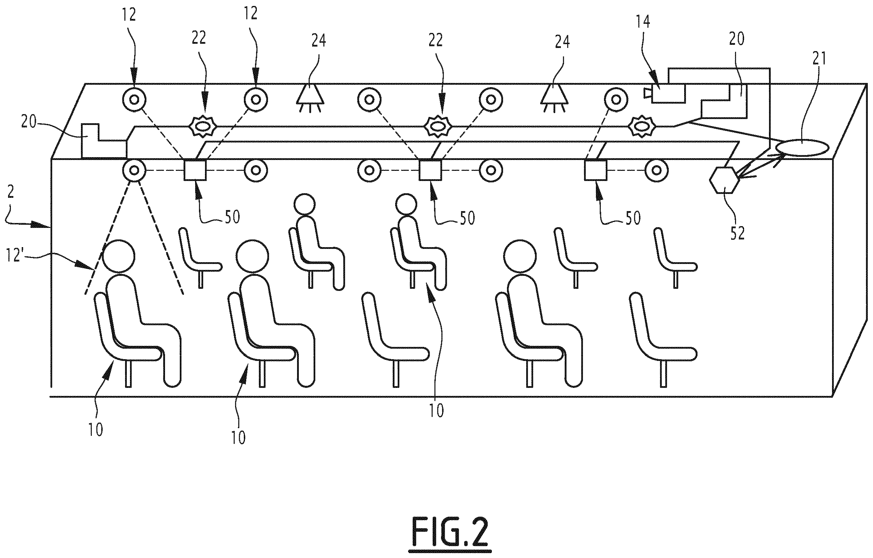

Figure 2 is an enlargement of a compartment 2. The compartment 2 comprises a plurality of seats 10 and corresponding sensors 12, of PIR and/or ultrasonic type, mounted over each seat 10, respectively.

In the compartment 2, a movable camera 14 is also provided, and used for remote monitoring of passengers. Advantageously, acceptance of the use of such camera 14 is required to passengers during reservation of the railway ticket.

To manage the system for detecting seat occupancy of the present invention, a dedicated mobile phone application with six separate login modes is provided.

The mobile phone application can be designed in a manner per se known based on the information of interest here below disclosed.

The mobile phone application is arranged to be run on mobile devices 16 (see figure 1). In figure 1 the mobile devices 16 are drawn outside the railway car 1 but they are arranged to be used by passengers and/or guest users and/or railway staff travelling on the railway vehicle 500.

In the following of the description, the mobile devices 16 will be always referred to with the same reference 16, but they can represent different devices accessing the seat occupancy database 4 or the remote seat occupancy database 5 depending on the case.

The mobile devices 16 are arranged, in turn, to communicate, as here below disclosed in detail, with a railway gateway 18 of the railway vehicle 500, placed for example in the same compartment 2 next to the locomotive 502 together with the seat occupancy database 4, and/or with the remote seat occupancy database 5, placed in the remote control center 6.

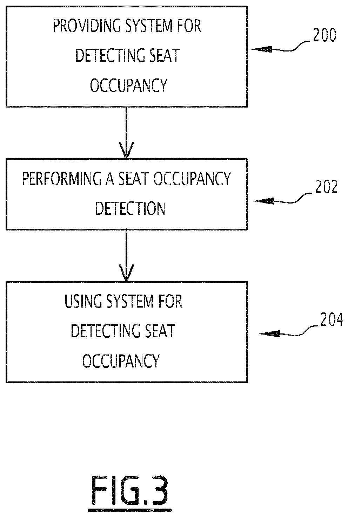

Figure 3 is a block diagram of the steps of a method for detecting seat occupancy on a railway car of a railway vehicle according to the present invention.

This method comprises a first step 200 of providing, on a railway car 1 of a railway vehicle 500, a system for detecting seat occupancy as above disclosed, and a second step 202 of performing a seat occupancy detection as here below detailed.

In a further step 204, the system for detecting seat occupancy is used as here below detailed.

The step 204 of using the system for detecting seat occupancy comprises performing, through at least one mobile device 16, different *"login steps"* or *"login modes"* on the mobile phone application running on the mobile device 16.

The following *"logins modes"* mode are possible:
- Travelling Ticket Collector (TTC) mode: this mode allows a remote passenger seat occupancy monitoring which helps a ticket collector reducing his workload and allowing him to perform an effective vacant seat management. Thanks to this function it is also possible capturing ticket violations in real-time;
- Passenger mode: this mode allows prolongation of a journey in real-time during travel. Thanks to this function, it is also possible to reduce ticket violations due to the need of passengers to travel further;
- Remote Guest and Local Guest mode: these modes helps passengers' relatives/friends to check the journey of a travelling passenger;
- Maintenance and Pantry Staff mode: these modes allow staff working on the railway vehicle 500 performing maintenance and passenger occupancy-based food delivery;
- HVAC/Lighting/Fan (HLF) control mode: this mode, which is not a dedicated mode but it is actually integrated in the TTC mode and can be accessed using a dedicated toggle button as detailed in the following, allows controlling an HVAC system of the railway vehicle 500, or the lightening or an air conditioning system based on passenger seat occupancy. This mode is enabled/disabled in the TTC mode. Thanks to this function, it is possible to save energy without affecting the passenger comfort.

Returning to figure 3, it will be now disclosed in detail the second step 202 of performing a seat occupancy detection.

Each seat 10 in the compartment 2 is mapped with each corresponding sensor 12 mounted directly above the seat 10, on the compartment ceiling. Advantageously, two sensors 12 are used in correspondence of each seat 10, a PIR sensor and an ultrasonic sensor, these being referred altogether with the reference 12.

PIR sensors are direct line-of-sight sensors suitable for closed and low height environments like a railway compartment. The PIR sensor is mounted such that its line-of sight covers an occupancy area of a particular seat 10, as shown in Figure 2.

Since a human body sitting on the seat 10 emits heat radiations, these radiations are detected by the PIR sensor 12 within its field-of-view (FOV) 12', and a first high pulse is generated. When there is no human intervention within the FOV 12' of the sensor 12, a second low pulse is generated.

The FOV 12' of the PIR sensor 12 can be modified by modifying Fresnel lens of the PIR sensor 12 in a manner per se known.

Ultrasonic sensors are also direct line-of-sight sensors and they are usually used in motion detection. An ultrasonic sensor 12 working in pulse-echo mode (i.e., acting as both transmitter and receiver) is mounted exactly above each seat 10 such that its FOV 12' covers the occupancy area of the seat 10. The ultrasonic sensor transmits ultrasound waves at a predetermined frequency (usually 40 kHz) for a first duration (preferably 25ms) and it receives reflected ultrasound waves for a second duration greater than the first duration (preferably 75ms).

If the seat 10 is not occupied, the transmitted ultrasound waves are reflected from the seat 10 and reach the sensor 12 in a predetermined threshold time (for example 60ms).

If the seat 10 is occupied, the transmitted waves are reflected by the human body sitting on the seat 10 before reaching the seat 10. Thus, the reflected waves reach the sensor 12 well before the threshold time (for example, within 50ms).

As a result, if the reflected wave reaches the sensor 12 in lesser time than the threshold time, a first high pulse is generated by the sensor 12, otherwise, if the reflected wave reaches the sensor 12 in a time equal to the threshold time, a second low pulse is generated by the sensor 12.

The sensors 12 are mounted on strips, which are aligned in parallel to the seats 10. The use of strips helps in re-aligning the sensors 12 in case of necessity.

The movable camera 14 captures the image of few seats 10 under its FOV. As the camera 14 is movable, it can take the images of the group of seats 10 at a particular time instant.

Each sensor 12 is considered as a node of a network.

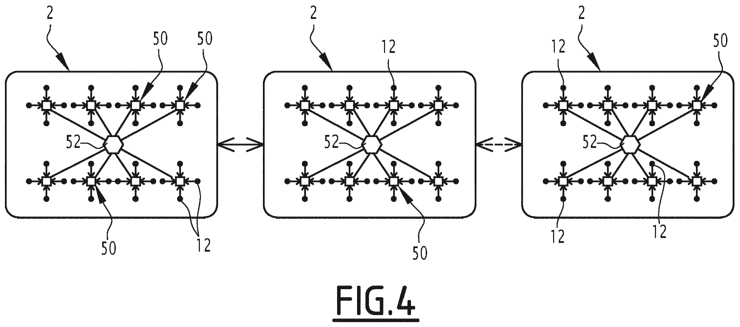

Figure 4 shows a schematic picture of the network created in each compartment 2 wherein the sensors 12 are grouped in different groups, and sensors belonging to a same group are connected to a parent node 50. All the parent nodes 50 in each compartment 2 are connected in turn to a central unitary node 52. The camera 14 is also directly connected to the unitary node 52.

Each compartment 2 comprises therefore few parent nodes 50, several sensor nodes equal to the number of seats 10 and one unitary node 52. All such sensor nodes, parent nodes 50 and unitary node 52 are connected through a wired network.

As a result, both the signals coming from the sensors 12 (the high/low pulses) and the images coming from the camera 14 are transmitted to the unitary node 52 of the compartment 2.

The unitary node 52 is arranged to elaborate, in a manner per se known, such signals and images to obtain seat occupancy data relative to the occupancy status of each seat 10 in the compartment 2.

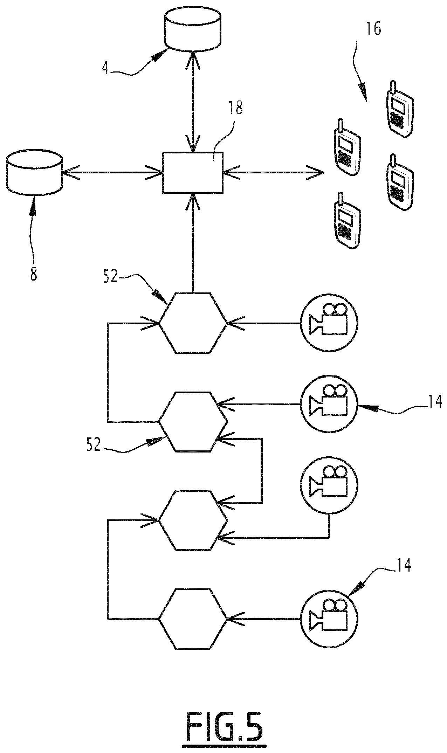

The unitary nodes 52 of all the compartments 2 are connected to the railway vehicle gateway 18 through a short range wireless communication, as shown in Figure 5 which is a schematic picture of a network of the railway vehicle 500.

The railway vehicle gateway 18 receives all seat occupancy data of all the compartments 2, as here below explained, and stores them in the seat occupancy database 4. Advantageously, the railway vehicle also pushes all seat occupancy data of the seat occupancy database 4 in the remote seat occupancy database 5. The railway vehicle gateway 18 also provides access for the mobile devices 16 to connect them to the remote control center 6.

In particular, the unitary node 52 of each compartment 2 sends seat occupancy data of that compartment 2 to the unitary node 52 of a neighboring compartment, in a chain process, as shown by the arrows of Figure 5. The unitary node 52 that receives data from a neighboring unitary node 52, adds its own compartment occupancy data to the received data and sends the whole data to the unitary node 52 of a next compartment, and so on.

This process continues up to the last compartment 2 of the railway car 1.

At this point, the unitary node 52 of the last compartment holds the seat occupancy data of the entire railway car 1 and transmits them to the railway vehicle gateway 18 which, in turns, store the seat occupancy data in the seat occupancy database 4 and, preferably, also in the remote seat occupancy database 5.

The seat occupancy detection has therefore been completed, and the corresponding data are stored in the seat occupancy database 4 and, preferably, also in the remote seat occupancy database 5.

The seat occupancy database 4 can be reached through a railway intranet provided with Wi-Fi access points in each compartment 2. The intranet can be accessed by the mobile devices 16 through the mobile phone application.

The remote seat occupancy database 5 can be reached through an internet provider through for example 4G/GSM. The remote seat occupancy database 5 can be accessed by the mobile devices 16, through the mobile phone application.

Returning again to figure 3, in the third step 204 of using the system for detecting seat of the present invention, a plurality of functions belonging to four categories is performed through the mobile phone application.

### 1. SECURITY MANAGEMENT

This functionality, performed in the Remote Guest and in the Local Guest mode, ensures safe and secure travel for single travelers and/or co-travelers sitting in other compartments.

In case of problems during the journey, this functionality enables passengers to send an alarm to the ticket collector for further control of a particular seat 10.

Remote monitoring of the passenger's occupancy of the railway vehicle by non-travelling friends/family or by friends/family travelling in the same railway vehicle 500 but in different compartment 2 is also allowed.

### 2. SEAT MANAGEMENT

This functionality is performed in the TTC mode and in the Passenger mode.

The ticket collector has with various options to monitor seat occupancy statuses, without needing to go to the actual location of the seats 10.

The ticket collector can therefore effectively managing vacant or empty seats (reserved but not boarded, early de-boarded, etc.).

In addition, any ticket violation by any passenger can be identified by the ticket collector in real time, by detecting the occupancy status of unreserved/not boarded seats 10.

Furthermore, during a travel disruption, smooth and chaos-free transit is provided for the passengers, by using empty seats 10 available in upcoming trains.

Passengers are provided with various options of managing their seat 10, disclosed in detail in the following, through the Passenger mode login.

In case of train incidents, the ticket collector can also send "SOS" alerts to the remote control center 6.

### 3. ENERGY MANAGEMENT

This functionality is performed in the HVAC/Light/Fan (HLF) control mode.

An HVAC unit 20, lights 22 and air conditioning fans 24 of the railway car 1 (see figure 2) are controlled altogether using an HVAC/Light/Fan (HLF) control unit 21 per se known, based on the seat occupancy by passengers.

This functionality reduces energy consumption without affecting the passenger comfort.

### 4. MAINTENANCE MANAGEMENT

This functionality is performed in the Maintenance and Pantry Staff mode.

Based on a total occupancy time (TOCC) of each seat 10, maintenance (cleaning, checking for wear and tear, proper functioning, damages) of the seats 10 can be scheduled.

This functionality reduces maintenance time and cost, and it also increases the passenger satisfaction.

This functionality also enables an efficient pantry service to the passengers.

In the followings, more details of the above-disclosed functionalities will be provided.

### 1. Method for Security Management

Security of an alone passenger or health sensitive passengers who are traveling can be monitored remotely by using the Remote Guest mode.

Co-passengers who are in other compartments of the same railway vehicle can be monitored using the Local Guest mode.

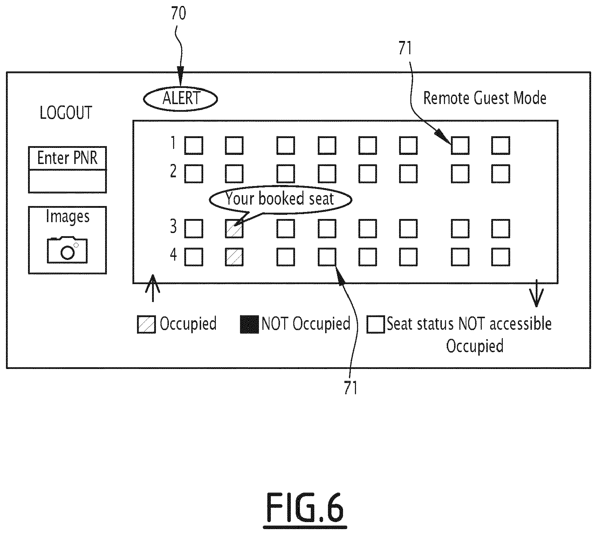

Figure 6 shows a picture of the interface of the mobile application as shown on a display of the mobile device 16 in the Remote Guest mode. A PNR number of the ticket is used as login username and a 4-digit transaction number provided during the ticket booking is used as password to login the mobile application and get the interface of figure 6.

In this picture, a plurality of rectangle-shaped symbols 71 each corresponds to a seat 10 on a predetermined compartment 2.

In this Remote Guest mode, the remote seat occupancy database 5, which is updated by the railway vehicle gateway 18 through the 4G/GSM internet as above disclosed, is accessed by the mobile device 16 of a remote guest user. The Remote Guest mode is enabled only when a passenger chooses one of two predetermined subscription options, in particular a first subscription *"Seat occupancy monitoring with image"* (camera and seat occupancy) or a second subscription *"Seat occupancy monitoring without image"* (only seat occupancy).

A passenger occupancy status of a particular seat 10 with known PNR number can only be viewed remotely by the guest user. This helps non-travelling persons to safely track a journey of family members or friends.

Thanks to this function, it is also possible to contact a ticket collector of the railway vehicle 500 from a remote location using a predefined option, which is available in the application through a first *"Alert"* button 70 as shown in Figure 6.

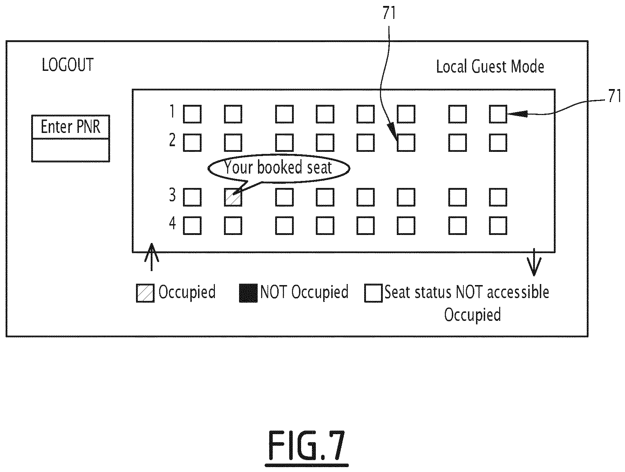

Figure 7 shows a picture of the interface of the application as shown on a display of the mobile device 16 in the Local Guest mode. A PNR number of the ticket is used as login username and a 4-digit transaction number provided during the ticket booking is used as password to login the mobile application and get the interface of figure 7.

In the Local Guest mode, seat occupancy data are accessed by a guest user through the seat occupancy database 4, which is updated by the railway vehicle gateway 18 through the wireless railway vehicle intranet as above disclosed.

A passenger occupancy status of a particular seat 10 can only be viewed locally by the guest user. For same group/family people travelling in different compartments 2, the Local Guest mode login can be used for monitoring the passengers in other compartments 2. This gives a sense of safety and security to passengers even when they are travelling in different compartments and reduces their frequent movement within the railway vehicle during travel.

### 2. Method for Seat Management

Along with the occupancy status of each seat 10 from the seat occupancy database 4, details of every tickets are available at the railway vehicle ticket database 8 (see figure 1) through the mobile application.

Two separate login modes are used to perform the method for seat management: the TTC mode and the Passenger mode.

The ticket collector and the passengers can connect to the railway vehicle intranet provided at access points available in each compartment 2, once the application is installed in their mobile devices 16.

The Passenger mode is available for all passengers with valid ticket.

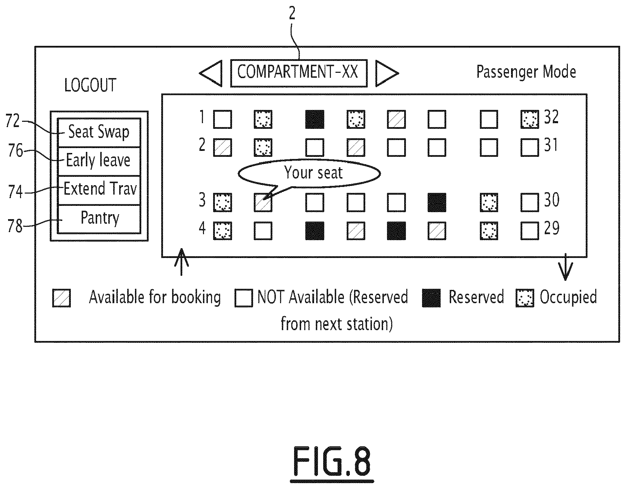

Figure 8 shows a picture of the interface of the application as shown on a display of the mobile device 16 in the Passenger mode. A PNR number of the ticket is used as login username and a 4-digit transaction number provided during ticket booking is used as password to login the mobile application and get the interface of figure 8.

The seat occupancy database 4 can be accessed to view occupancy status of all seats 10 in real-time. This provides the passengers the possibility to occupy any unoccupied and unreserved seat 10 until the passenger for that particular seat 10 boards the railway vehicle. The passengers can also request a change of seat after seeing an unoccupied and unreserved seat 10 through a second *"Seat Swap"* button 72 provided in the application. The ticket controller, based on the availability of a particular seat 10, can approve or reject the requested change of seat 10.

If a passenger needs to extend his journey beyond the actual booked destination station, he can check availability of unoccupied and unreserved seats 10 and request the prolongation of the journey, through a third *"Extend Travel"* button 74 provided in the application. The ticket controller can check the seat availability statistics and decide whether to accept or reject the request. If accepted, the passenger may be provided with the same seat 10 or with a different seat 10 for the rest of the journey.

If the passenger has decided to de-board the railway vehicle before reaching the booked destination, he can notify it in the mobile phone application using a fourth *"Early Leave"* button 76. This is notified to the ticket controller in real-time and the vacant seat 10 can be used for other passengers' requests of prolongation of the journey or change of the seat 10, or released for further booking.

Using a fifth *"Pantry"* button 78 the passengers can send a request for booking food to be delivered by a pantry staff.

The TTC mode is available only for the travelling ticket controller.

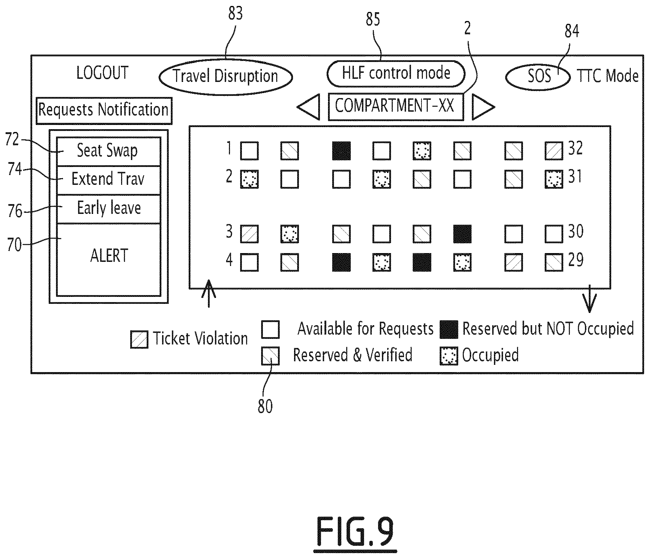

Figure 9 shows a picture of the interface of the application as shown on a display of the mobile device 16 in the TTC mode. The seat occupancy database 4 and the railway vehicle ticket database 8 can be accessed in this mode by the mobile application. The occupancy status of each reserved seat 10 can be viewed by a ticket controller anywhere from the railway vehicle 500, without needing to come to the actual seat location. This helps identifying any unauthorized seat occupancy.

Unique login credentials for each ticket controller are provided. The railway vehicle number is used as username and a 4-digit password is generated in a manner per se known and shared with the ticket controller before commencing each journey.

If a person has reserved a seat 10 from a first station A but he is boarding from a second station B, this can be identified by the ticket controller before reaching the second station B. If a passenger has not occupied the reserved seat 10 before the railway vehicle reaches the next station, the ticket controller can release the seat for further booking or use it for passengers' requests of prolongation of the journey or change of the seat 10, until the second station.

If the ticket controller verifies a ticket/passenger, he can mark the seat 10 as reserved and verified through a sixth *"Reserved and Verified"* button 80, so that the seat 10 is no more available for booking or occupancy by other passengers.

Similarly, if a passenger has reserved a seat 10 from a first station A to a second station B, but the passenger does not de-board at the second station B and tries to travel further, this can be identified by the ticket controller using the seat occupancy status, and he can take the necessary action.

In case of travel disruption (like land slide, track damage, etc.), the ticket controller can alert the control center 6 to provide alternative arrangements by pressing a seventh *"Travel Disruption"* button 83. In such a case, the mobile phone application can provide the seat occupancy statistics to the control center 6. The control center 6 can requests statistics from next upcoming trains (for example, the next five trains) and allocates seats in the upcoming trains for the passengers in the current disrupted train. If there are no/not enough seats available in upcoming railway vehicles or other railway vehicles cannot be used, then the control center 6 can arrange for alternative means of transport like buses and cabs. This ensures smooth and chaos-free commuting of passengers during a disruption.

In case of emergency like a railway vehicle incident, the ticket controller can alert the control center 6 by pressing a eighth "SOS" button 84. This immediately sends all passenger data to the control center 6 and alerts rescue operations like ambulances, police. In such case, all camera data can be live-streamed at the control center 6.

### 3. Method for energy management

Each compartment 2 has a HLF control unit 21 connected to the unitary node 52 of that compartment 2. When a parent node 50 communicates all low signal (i.e., all occupancy sensor nodes mapped to that parent node 50 detects no occupancy), the HLF control unit 21 turns off the lights 22, the fan 24 of the air conditioning and reduces cool air flow from HVAC ducts of the HVAC unit 20 associated with the seats 10 where no occupancy was detected.

The HLF Control mode is available only in the TTC mode for the travelling ticket controller. In case of need/malfunctioning, the ticket controller can enable/disable the HLF control mode by pressing a ninth *"HLF Control Mode"* button 85. This toggles the HLF mode to the particular compartment 2.

### 4. Method for Maintenance Management

The Maintenance Staff mode login is available for maintenance staffs in each station or at specific stations.

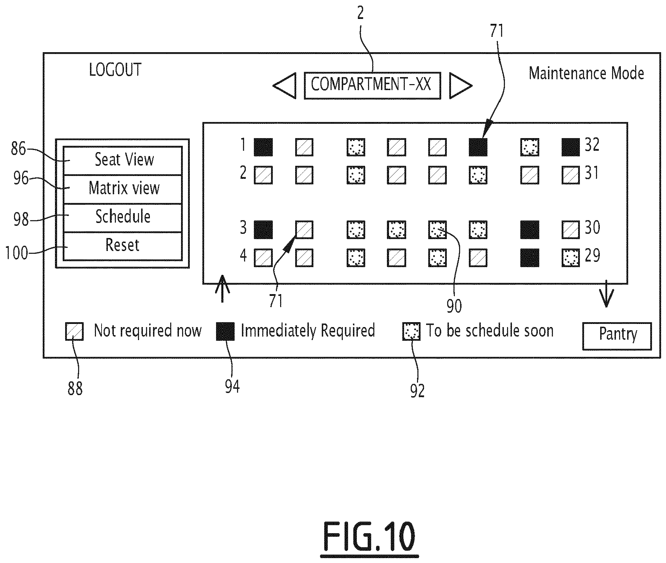

Figure 10 shows a picture of the interface of the application as shown on a display of the mobile device 16 in the Maintenance Staff mode.

The seat occupancy database 4 can be accessed in this mode to view occupancy status of all seats 10 in real time. Unique login credentials for each station are provided. A railway vehicle number appended with the station code is used as username and a 4-digit password is generated and shared with an operator leader before commencing the journey.

The control center 6 calculates, in a manner per se known, a total time of occupancy (TOCC) of each seat 10 from the time stamp of the tickets of the railway vehicle ticket database 8. Based on the TOCC, the control center 6 creates a maintenance matrix of the railway vehicle 500, which is updated in real time and accessed by the maintenance staff through the mobile application. The maintenance staff can plan for maintenance of the seats of the compartments 2 based on the matrix created.

For example, an average of 50 hours or two complete travels (whichever occurs early) is set as predetermined interval between each maintenance schedule. If particular seats 10 are occupied more frequently, from the data from the maintenance matrix, the staff can schedule a maintenance in an upcoming station. If particular seats 10 are occupied for less time only, then maintenance of those seats 10 can be skipped. This improves maintenance time.

With a tenth *"Seat View"* button 86 the maintenance need of each seat 10 is displayed in a graphical view on a display of the mobile device 16. A green rectangle 88, when present in any of the rectangle-shaped symbols 71 corresponding to seats 10, indicates maintenance not required at that particular seat 10, a yellow rectangle 92, when present in any of the rectangle-shaped symbols 71, indicates maintenance to be scheduled soon at that particular seat 10, and red rectangle 94, when present in any of the rectangle-shaped symbols 71, indicates immediate maintenance required at that particular seat.

An eleventh *"Matrix View"* button 96 displays the total occupancy time of each seat 10.

A twelfth *"Schedule"* button 98 is to notify the maintenance team in upcoming station to plan for cleaning and maintenance of predetermined seats 10.

A thirteenth *"Reset"* button 100 resets the total occupancy time of particular seats 10 to zero hour. This is used after maintenance is performed on those particular seats 10.

The Pantry Staff mode login is available for pantry staffs.

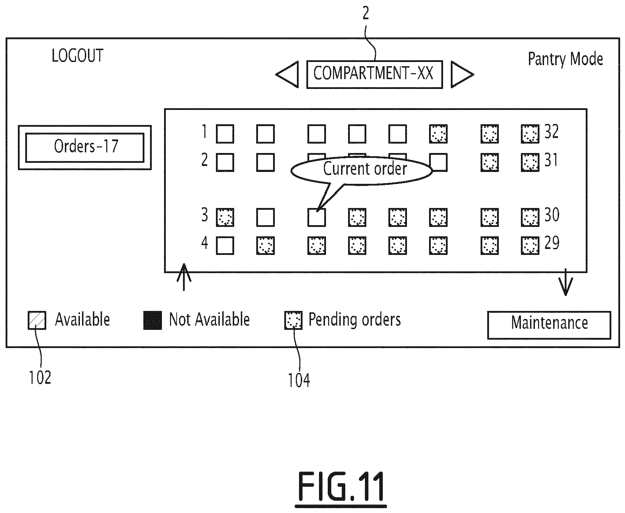

Figure 11 shows a picture of the interface of the application as shown on a display of the mobile device 16 in the Pantry Staff mode. When passengers have booked food from pantry, the pantry staff can login into this mode and view the seat occupancy status before delivering the food. For pantry staff a separate 4-digit number is provided for each journey as password and a railway vehicle number is used as login username.

In this mode, the seat occupancy data is accessed through the seat occupancy database 4 through the railway vehicle intranet.

The pantry staff can view pantry orders associated with particular seats 10: a green rectangle 102, when present also in any of the rectangle-shaped symbols 71, indicates that a ready pantry order has to be delivered at that particular seat 10; a yellow rectangle 104, when present also in any of the rectangle-shaped symbols 71, indicates a pending pantry order still to be delivered at that particular seat 10.

The remote control center 6 helps to process the incoming request from TTC mode through buttons 83 and 84 or Remote Guest mode through button 70 or incoming seat occupancy database 4 from railway vehicle gateway 18. The remote control center 6 helps to forward the request to TTC mode from remote guest users, to store the seat occupancy database 4 into remote seat occupancy database 5 and to create a maintenance matrix of the railway vehicle 500 for the "Maintenance Staff Mode".

Clearly, the principle of the invention remaining the same, the embodiments and the details of production can be varied considerably from what has been described and illustrated purely by way of non-limiting example, without departing from the scope of protection of the present invention as defined by the attached claims.

## Claims

1. A system for detecting seat occupancy on a railway car (1) of a railway vehicle (500) comprising a plurality of compartments (2), the system comprising a seat occupancy database (4) and a remote control center (6) which includes a railway vehicle ticket database (8), wherein the seat occupancy database (4) comprise data relative to the occupancy status of seats of the compartments (2) and the railway vehicle ticket database (8) comprises data relative to reserved railway tickets bought from passengers, each compartment (2) comprising a plurality of seats (10) and corresponding sensors (12) mounted over each seat (10), respectively, said sensors being arranged to detect an occupancy status of the associated seat (10).

2. The system of claim 1, further comprising, in each compartment (2), a movable camera (14) used for remote monitoring of passengers.

3. The system of claim 1 or 2, wherein the seat occupancy database (4) is located in a compartment (2) next to a locomotive (502) of the railway vehicle (500).

4. The system of any of the preceding claims, wherein the sensors (12) comprise PIR and/or ultrasonic sensors.

5. A method for detecting seat occupancy on a railway car (1) of a railway vehicle (500) comprising a first step (200) of providing a system for detecting seat occupancy according to any of the preceding claims, and a second step (202) of performing a seat occupancy detection within said railway car, wherein the second step (202) comprises the steps of:
- detecting occupancy of each seat (10) of each compartment (2) through the corresponding sensor (12) mounted above it;
- receiving signals coming from the sensors (12) representative of the occupancy status of the associated seat (10);
- elaborating, said signals to obtain seat occupancy data relative to the occupancy status of each seat (10) of the compartment (2);
- sending said seat occupancy data to a railway vehicle gateway (18) located in the railway vehicle (500);
- copying, through the railway vehicle gateway (18) said seat occupancy data into the seat occupancy database (4) and/or into a remote seat occupancy database (5).

6. The method for detecting seat occupancy on a railway car (1) of a railway vehicle (500) according to claim 5, further comprising, in each compartment (2), grouping the sensors (12) in different groups, and connecting sensors (12) belonging to a same group to a parent node (50);
- in each compartment (2), connecting all the parent nodes (50) to a central unitary node (52), said central unitary node (52) being arranged to receive the signals coming from the sensors (12); and
- elaborating said signals at the unitary node (52).

7. The method of claims 5 or 6, wherein sending said seat occupancy data to the railway vehicle gateway (18) comprises sending, from the unitary node (52) of each compartment (2), seat occupancy data of that compartment (2) to the unitary node (52) of a neighboring compartment (2), in a chain process, wherein the unitary node (52) that receives data from a neighboring unitary node (52) adds its own compartment occupancy data to the received data, and sends the whole data to the unitary node (52) of a next compartment, up to a last compartment (2) of the railway car (1).

8. The method of any of the claims 5 to 7, wherein the sensors (12) comprise PIR sensors arranged to detect radiations emitted by a human body sitting on the corresponding seat (10) and to generate a first high pulse when there is a human body sitting on the seat (12), and to generate a second low pulse when there is no human body sitting on the seat (10).

9. The method of any of the claims 5 to 8, wherein the sensors (12) further comprise ultrasonic sensors (12) arranged to transmit ultrasound waves at a predetermined frequency for a first predetermined duration, and to receive reflected ultrasound waves for a second duration greater than the first duration, so that if the corresponding seat (10) is not occupied, the transmitted ultrasound waves are reflected from the seat (10) and reach the sensor (12) in a predetermined threshold time, if the seat (10) is occupied, the transmitted waves are reflected by the human body sitting on the seat (10) before reaching the seat (10), so that the reflected waves reach the sensor (12) before the threshold time, the sensors (12) being arranged to generate a first high pulse if the reflected wave reaches the sensor (12) in lesser time than the threshold time, and to generate a second low pulse if the reflected wave reaches the sensor (12) in a time equal to or higher than the threshold time.

10. The method of claim 5, further comprising a third step (204) of using the system for detecting seat occupancy performing, through at least one mobile device (16) arranged to be connected to the seat occupancy database (4) or to the remote seat occupancy database (5) and to the railway vehicle ticket database (8), a plurality of *"login modes"* on a mobile phone application running on said mobile device 16, each *"login mode"* corresponding to a respective operation performed by a user or by a ticket collector travelling on the railway vehicle.

11. The method of claim 10, wherein the plurality of *"login modes"* comprises at least one of the following modes:
- a Travelling Ticket Collector (TTC) mode which allows a passenger seat occupancy monitoring;
- a Passenger mode which allows prolongation of a journey in real-time during travel;
- a Remote Guest and a Local Guest mode which allows passengers' relatives/friends to check the journey of a travelling passenger;
- a Maintenance and a Pantry Staff mode which allow staff working on the railway vehicle (500) performing maintenance and passenger occupancy-based food delivery; and
- an HVAC/Lighting/Fan (HLF) control mode, preferentially included in the Travelling Ticket Collector (TTC) mode, which allows controlling an HVAC system of the railway vehicle 500, or the lightening or an air conditioning system of the railway vehicle (500) based on passenger seat occupancy.

12. A railway vehicle (500) provided with a system for detecting seat occupancy on a railway car (1) according to any of the claims 1 to 4.
